Europäisches Patentamt

European Patent Office

Office européen des brevets

(11) Veröffentlichungsnummer: **0 114 294**
**A2**

(12) **EUROPÄISCHE PATENTANMELDUNG**

(21) Anmeldenummer: **83112504.2**

(22) Anmeldetag: **13.12.83**

(51) Int. Cl.³: **E 03 C 1/04**
**E 03 C 1/06**

(30) Priorität: **15.01.83 DE 3301221**

(43) Veröffentlichungstag der Anmeldung:
**01.08.84 Patentblatt 84/31**

(84) Benannte Vertragsstaaten:
**AT BE CH DE FR GB IT LI NL SE**

(71) Anmelder: **Hans Grohe GmbH & Co KG**
**Postfach 45**
**D-7622 Schiltach(DE)**

(72) Erfinder: **Flieger, Horst**
**Schlossbergstrasse 3**
**D-7622 Schiltach(DE)**

(74) Vertreter: **Patentanwälte Ruff und Beier**
**Neckarstrasse 50**
**D-7000 Stuttgart 1(DE)**

(54) **Verbindung von wasserführenden Teilen.**

(57) Diese Verbindung dient der Verbindung wasserführender Teile mit im Verbindungsbereich unrundem Querschnitt. Sie eignet sich insbesondere zum Anschluß eines Brausekopfes (1) an eine im Querschnitt im wesentlichen rechteckige Aufputzrohrleitung (2). Bei ihr sind mindestens zwei innerhalb des Außenquerschnittes der wasserführenden Teile (2,8) angeordnete, miteinander verschraubbare Verbindungselemente (5,15) vorgesehen, wobei wenigstens eines der wasserführenden Teile mindestens einen von außen zugänglichen, innerhalb des Außenquerschnittes des wasserführenden Teiles (8) liegenden und parallel zur Verbindungsfläche der beiden wasserführenden Teile (2,8) verlaufenden Verbindungsflansch (12) mit wenigstens einer Öffnung (14) aufweist. Diese Flanschöffnung (14) ist so angeordnet und bemessen, daß durch sie die beiden Verbindungselemente (5,15) miteinander in Wirkverbindung gebracht werden können.

FIG. 2

EP 0 114 294 A2

0114294

Anmelderin:   Hans Grohe GmbH & Co. KG
              Auestraße 9, Postfach 45
              7622 Schiltach

## Verbindung von wasserführenden Teilen

Die Erfindung betrifft eine Verbindung von wasserführenden Teilen mit unrundem Querschnitt im Verbindungsbereich, insbesondere zum Anschluß eines Brausekopfes an eine im Querschnitt im wesentlichen rechteckige Aufputzrohrleitung.

Im Sanitärbereich sind im Querschnitt im wesentlichen rechteckige Aufputzrohrleitungen bereits bekannt. Sie werden eingesetzt zum einen aus optischen Gründen, dann aber auch deshalb, weil derartige Aufputzrohrleitungen weniger auftragen und gleichzeitig der verdrehsicheren Halterung von auf ihnen verschieblich angeordneten Vorrichtungen, beispielsweise der verdrehsicheren Halterung eines Halters für eine Handbrause dienen können. Die Verbindung derartiger Leitungen untereinander und ihr Anschluß an Armaturen, wie beispielsweise einen Brausekopf, wirft jedoch Dichtprobleme auf, denen bisher nur mit Verlötung begegnet wurde. Es wurde daneben auch bereits vorgeschlagen, im Querschnitt im wesentlichen recht-eckige Rohrleitungen im Anschlußbereich zylindrisch auszubilden und mit einem üblichen Anschlußgewinde oder einem Bund für eine Oberwurfmutter zu versehen. Beides ist relativ aufwendig und teuer. Die Verschraubung mit einer Oberwurfmutter hat zudem den Nachteil, daß sie im Anschlußbereich eine Querschnittserweiterung zur Folge hat, die nicht nur aus optischen, sondern auch aus hygienischen Gründen vermieden werden sollte. Vor allem aber bringt die ungünstige abrupte Änderung des hydraulischen Querschnitts Wasserschallprobleme.

Der Erfindung liegt die Aufgabe, eine Verbindung der eingangs beschriebenen Art zu schaffen, die einfach und ohne großen technischen Aufwand durchführbar ist und im Verbindungsbereich keine Querschnittserweiterungen bedingt.

Diese Aufgabe wird erfindungsgemäß durch eine Verbindung der eingangs beschriebenen Art gelöst, bei der mindestens zwei innerhalb des Außenquerschnittes der wasserführenden Teile angeordnete, miteinander verschraubbare Verbindungselemente vorgesehen sind und wenigstens eines der wasserführenden Teile mindestens einen von außen zugänglichen, innerhalb des Außenquerschnittes des wasserführenden Teiles liegenden und parallel zur Verbindungsfläche der beiden wasserführenden Teile verlaufenden Verbindungsflansch mit mindestens einer Öffnung aufweist, durch die die Verbindungselemente miteinander in Wirkverbindung bringbar sind und bei der wenigstens ein anderes wasserführendes Teil im wesentlichen gleich ausgebildet ist oder wenigstens ein darin befindliches und lediglich von der Verbindungsfläche aus zugängliches Verbindungselement aufweist, das mit der Flanschöffnung fluchtet.

Eine derartige Verbindung ermöglicht einen problemlosen Anschluß ohne daß hierzu eine Querschnittserweiterung in Kauf zu nehmen wäre, da alle dem Anschluß dienenden Teile innerhalb des Querschnittes der wasserführenden Teile angeordnet sind. Von besonderem Vorteil ist hierbei das optisch
harmonische Aussehen einer derartigen Verbindung.

Das Verbindungselement des anderen wasserführenden Teiles
ist vorzugsweise durch- und/oder umströmbar ausgebildet.
Es ist auch möglich, dieses Verbindungselement als einen
Einsatz auszubilden, dessen Außenabmessungen vorzugsweise
den Innenabmessungen des Leitungskanales des zugehörigen
wasserführenden Teiles entsprechen, wobei der Einsatz dann
wenigstens eine Durchbrechung aufweist, die der Wasserführung dient. Bei einer bevorzugten Ausführungsform
weist das als Einsatz ausgebildete Verbindungselement
zwei der Wasserführung dienende Durchbrechungen auf, zwischen denen eine Gewindebohrung zum Einschrauben des als
Befestigungsschraube ausgebildeten zweiten Verbindungselementes angeordnet ist. Die Gewindebohrung ist vorzugsweise
als Gewindesackloch ausgebildet, mit dem Vorteil, daß ihr
Gewinde gegen das Eindringen von in der Rohrleitung strömendem Wasser geschützt ist.

Das eine wasserführende Teil ist bei einer bevorzugten
Ausführungsform der erfindungsgemäßen Verbindung ein im
Querschnitt im wesentlichen rechteckiges Rohr, wobei der
Verbindungsflansch vorzugsweise von der nicht sichtbaren
Rückseite her zugänglich ist.

Die Verbindungsfläche zwischen den beiden jeweils verbundenen, wasserführenden Teilen kann grundsätzlich beliebig
verlaufen. Im allgemeinen beträgt der Winkel zur Durchflußrichtung 30°, z.B. 45°, wegen der problemloseren Abdichtung verläuft sie jedoch vorzugsweise in der Regel
senkrecht zur Durchströmrichtung.

Die Befestigungsschraube ist vorzugsweise in ihrer axialen Richtung zugängig, so daß sie mit einem üblichen Schraubendreher angezogen bzw. gelöst werden kann. In Sonderfällen wäre es jedoch auch möglich, mit winkelförmig gestalteten Schraubendrehern zu arbeiten.

Das wasserführende Teil, das den Flansch aufweist, kann in einem kurzen Abstand vor der Verbindungsfläche von der Seite, von der aus der Flansch zugänglich ist, weggebogen bzw. abgewinkelt sein, worauf in der nachfolgenden Beschreibung einer bevorzugten Ausführungsform gesondert hingewiesen wird.

Die Befestigungsschraube kann in einen wasserführenden Teil zwischen zwei wasserführenden Bereichen geführt sein, die im montierten Zustand mit den der Wasserführung dienenden Bereichen des anderen wasserführenden Teiles in Kommunikation stehen. Der Verbindung kann eine Dichtung zugeordnet sein, die vorzugsweise den Einsatzdurchbrechungen entsprechende Durchbrechungen aufweist und ansonsten den Außenabmessungen des Einsatzes im wesentlichen entspricht.

Die erfindungsgemäße Verbindung ist besonders für sichtbar verlegte Leitungen von sanitären Anlagen geeignet und kann gerade oder auch als Winkelverbindung ausgebildet sein.

Der wasserführende Kanal der wasserführenden Teile ist im Verbindungsbereich vorzugsweise in mindestens zwei Teilströme aufgeteilt und danach wieder vereinigt. Das zweite wasserführende Teil kann einen Brausekopf aufweisen, in den die beiden wasserführenden Bereiche des zweiten wasserführenden Teiles münden. Zur Wandbefestigung kann wenigstens eines der wasserführenden Teile kurz vor der Verbindungsebene eine Durchbrechung für eine Wandbefestigungsschraube aufweisen, die vorzugsweise senkrecht zur und zwischen den aufge-trennten wasserführenden Bereichen angeordnet ist. Dieser
Wandbefestigungsschraube ist bei einer bevorzugten Ausführungsform eine sie abdeckende Platte zugeordnet.

Das eine, als Einsatz ausgebildete Verbindungselement kann
als Spreizglied ausgebildet sein, mit dem Vorteil, daß es
im Inneren des wasserführenden Teiles verschoben und in
diesem erst durch das Eindrehen der Befestigungsschraube
verankert wird. Letzteres bietet den Vorteil, daß das wasserführende Teil, dem der Einsatz zugeordnet ist, in seiner
Länge noch am Arbeitsplatz dem dort jeweils herrschenden
Verhältnissen angepaßt werden kann, d.h. der Monteur braucht
am Einsatzort nicht mit vorgefertigten Aufputzrohrleitungsabschnitten zu arbeiten. Er kann vielmehr mit langen Aufputzrohrleitungen arbeiten, von denen er sich den jeweils
gewünschten Abschnitt absägen kann. In das freie Ende des
abgesägten Abschnittes ist dann der als Spreizglied ausgebildete Einsatz einzuschieben. Die Verankerung des Einsatzes
im Rohrleitungsende folgt dann beim Eindrehen der Befestigungsschraube.

Weitere Einzelheiten, Merkmale und Vorteile der Erfindung
ergeben sich den Ansprüchen und der nachfolgenden Beschreibung einer bevorzugten Ausführungsform im Zusammenhang mit
der Zeichnung.

In der Zeichnung zeigen jeweils schematisch

Fig. 1 eine Seitenansicht eines Brausekopfes, der
an das eine Ende einer Aufputzrohrleitung
angeschlossen und im Verbindungsbereich an
einer Wand befestigt ist,

Fig. 2 eine Teilansicht des in Fig. 1 Dargestellten, teilweise im Schnitt,

Fig. 3 einen Schnitt entlang der Linie III-III in Fig. 2,

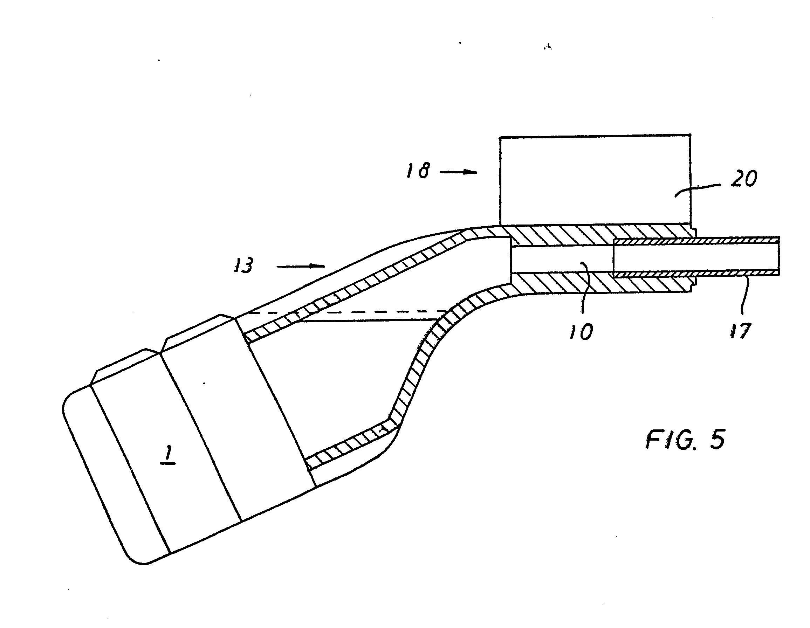

Fig. 4 einen Schnitt entlang der Linie IV-IV in Fig. 2,

Fig. 5 den in Fig. 1 dargestellten Brausekopf teilweise geschnitten entlang der Linie V-V (vgl. Fig. 4) und

Fig. 6 eine teilweise geschnittene Seitenansicht einer weiteren Ausführungsform eines an einer Wand montierten Brausekopfes.

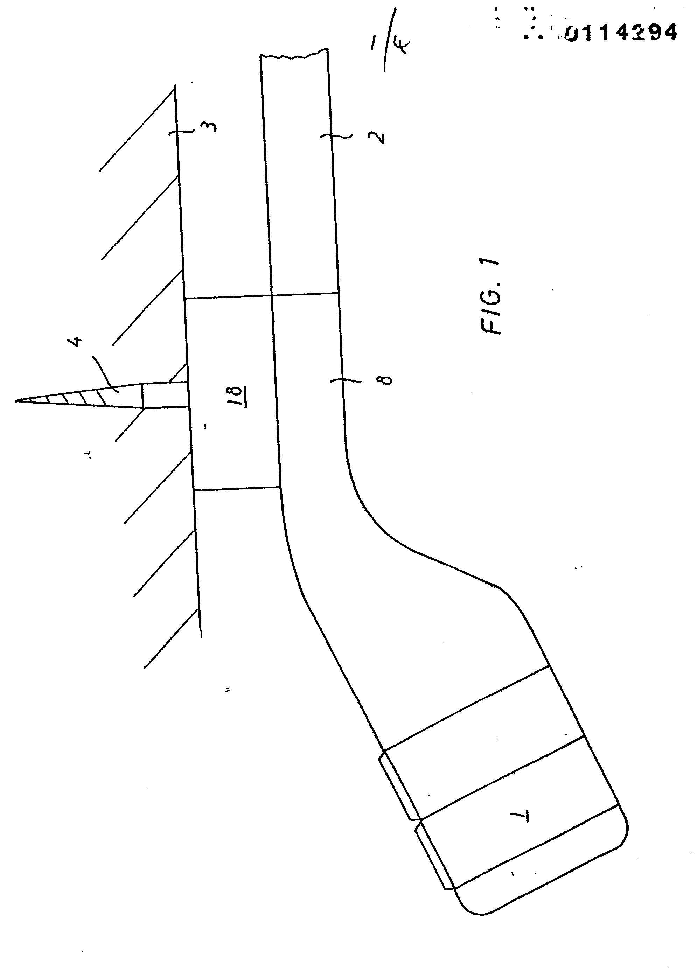

Der in Fig. 1 dargestellte Brausekopf 1 ist an das eine Ende einer Aufputzrohrleitung 2 angeschlossen und im Anschlußbereich an einer Wand 3 mittels einer Schraube 4 befestigt. Die Aufputzrohrleitung 2 weist einen im wesentlichen rechteckigen Querschnitt auf. In dem zum Brausekopf 1 weisenden Ende der Aufputzrohrleitung 2 ist ein als Einsatz ausgebildetes Verbindungselement 5 befestigt. Dieser Einsatz 5 weist zwei parallel zueinander und parallel zur Längsachse der Rohrleitung 2 verlaufende zylindrische Durchbrechungen auf, zwischen denen ein Gewindesackloch 6 vorgesehen ist. Die zum Brausekopf 1 weisende Stirnseite des Einsatzes 5 ist mit einer Dichtung 7 belegt, die rundum an der Wandung der Rohrleitung 2 anliegt und drei Durchbrechungen aufweist, die mit den beiden Durchbrechungen des Einsatzes 5 bzw. dem im Einsatz 5 vorgesehenen, zentral angeordneten Gewindesackloch 6 fluchten.

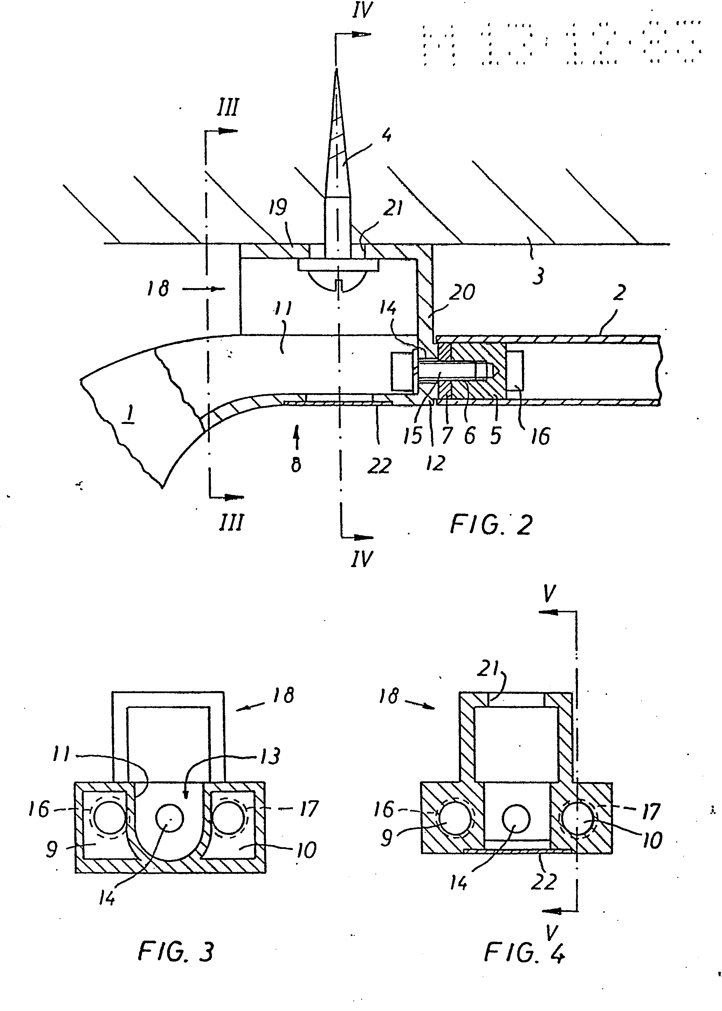

Der Brausekopf 1 weist ein Anschlußstück 8 auf, in dem zwei getrennte, zum Brausekopf 1 führende Kanäle 9, 10 vorgesehen sind, die in der Ansicht nach Fig. 1 hintereinander und in der Ansicht nach Fig. 3 nebeneinander
verlaufen. In Fig. 2 ist die Innenwand 11 des Kanales 9
zu sehen.

An dem zur Rohrleitung 2 weisenden Ende des Anschlußstük-
kes 8 ist ein Anschlußflansch 12 vorgesehen, der die beiden mit Abstand parallel zueinander verlaufenden Kanäle
9, 10 und den zwischen ihnen vorgesehenen Zwischenraum
13 stirnseitig abdeckt. Der Flansch 13 weist eine zentrale Durchbrechung 14 auf, die mit dem Gewindesackloch
6 des Einsatzes 5 und der damit fluchtenden zentralen
Durchbrechung der Dichtung 7 fluchtet. Durch die zentrale
Durchbrechung 14 des Flansches 12 und die zentrale Durchbrechung der Dichtung 7 ragt eine in das Gewindesackloch
6 des Einsatzes 5 geschraubte Befestigungsschraube 15.
Durch Anziehen der Befestigungsschraube 15 kann der Anschlußflansch 12 des Anschlußstückes 8 stirnseitig an der
Aufputzrohrleitung 2 befestigt werden, wobei die Dichtung
7 für die nötige Abdichtung sorgt.

Die Kanäle 9, 10 enden anschlußseitig in kurzen Rohrstutzen
16, 17, die durch entsprechend angeordnete und entsprechend
bemessene Durchbrechungen des Anschlußflansches 12 ragen.
Der Außendurchmesser dieser Rohrstutzen 16, 17 entspricht
dem Durchmesser der beiden, der Wasserführung dienenden
Durchbrechungen des Einsatzes 5 und der zugehörigen Durchbrechungen der Dichtung 7, so daß die Rohrstutzen durch
diese Durchbrechungen hindurch soweit in das Innere der
Aufputzrohrleitung 2 eingeschoben werden können, daß ihre
freien Enden in Einschubrichtung vor dem Einsatz 5 liegen.

Am Anschlußstück 8 ist ein Abstandhalter 18 angeformt.
Dieser Abstandhalter 18 könnte grundsätzlich massiv ausgebildet sein. In der dargestellten Ausführungsform weist der
Abstandhalter 18 eine Wandplatte 19 und eine im wesentlichen U-förmig verlaufende Wandung 20 auf, ist also hohl
ausgebildet und auf der von der Aufputzrohrleitung 2 abgewandten Seite von außen zugänglich. In der Wandplatte
19 ist eine zentrale Durchbrechung 21 für die Befestigungsschraube 4 vorgesehen. Die Befestigungsschraube 4 ist über
eine Durchbrechung zugänglich, die im Anschlußstück 8 vorgesehen und mittels einer Abdeckplatte 22 verschließbar ist.
Diese Durchbrechung im Anschlußstück ist zentral, d.h. zwischen den beiden Kanälen 9, 10 des Anschlußstückes angeordnet, also in dem nicht der Wasserführung dienenden Bereich 13 des Anschlußstückes 8.

Zum Anschluß des Brausekopfes 1 an der Aufputzrohrleitung
2 und zur Befestigung an der Wand 3 kann folgendermaßen
vorgegangen werden:

Zunächst werden die beiden Rohrstutzen 16, 17 des Anschlußstückes 8 durch die ihnen zugeordneten Durchbrechungen in
der Dichtung 7 in die ihrer Führung dienenden Durchbrechungen des Einsatzes 5 eingeschoben, bis der Anschlußflansch
12 an der Dichtung 7 anliegt. Ist dies geschehen, wird
die Schraube 15 durch die ihr im Anschlußflansch 12 zugeordnete zentrale Durchbrechung und die ihr in der Dichtung 7 zugeordnete zentrale Durchbrechung geschoben und
in das Gewindesackloch 6 des Einsatzes 5 eingeschraubt.
Dies ist wegen des zwischen den beiden Kanälen 9, 10 bestehenden Zwischenraumes 13 ohne weiteres mit Hilfe eines
üblichen Schraubendrehers möglich. Ist die Befestigungsschraube 15 angezogen, so stellt der Brausekopf 1 mit
der Aufputzrohrleitung 2 eine stabile Einheit dar, die ohne großen technischen Aufwand an der Wand 3 befestigt
werden kann. Hierzu ist die Abdeckplatte 22 zu lösen,
so daß die Schraube 4 zwischen den beiden Kanälen 9, 10
hindurch in den Abstandhalter 18 eingeschoben und anschließend mit der Wand 3 verschraubt werden kann.

Die beiden Kanäle 9, 10, die im Bereich des Anschlußstückes
8 zunächst parallel zur Wand 3 verlaufen, dann aber mit
der Wand 3 einen spitzen Winkel einschließen, vereinigen
sich im anschlußseitigen Bereich des Brausekopfes 1 zu
einem gemeinsamen Kanal, der der Wasserzuführung zum Brausekopf 1 dient. Der zwischen den Kanälen 9, 10 vorgesehene
Zwischenraum 13 bietet den Vorteil, daß die der Befestigung
des Anschlußstückes 8 an der Aufputzrohrleitung 2 dienende
Schraube 15 zugänglich ist. Dies gilt insbesondere bei
winkeliger Verbindung zwischen dem Brausekopf 1 und der
Aufputzrohrleitung 2, aber auch dann, wenn die Längsachse
der Aufputzrohrleitung 2 mit der Längsachse des daran angeschlossenen zweiten wasserführenden Teiles fluchten
sollte. Dann allerdings wäre die Befestigungsschraube 15
nicht mehr mittels eines üblichen Schraubendrehers, sondern vielmehr mittels eines abgewinkelten Schraubendrehers
zu betätigen.

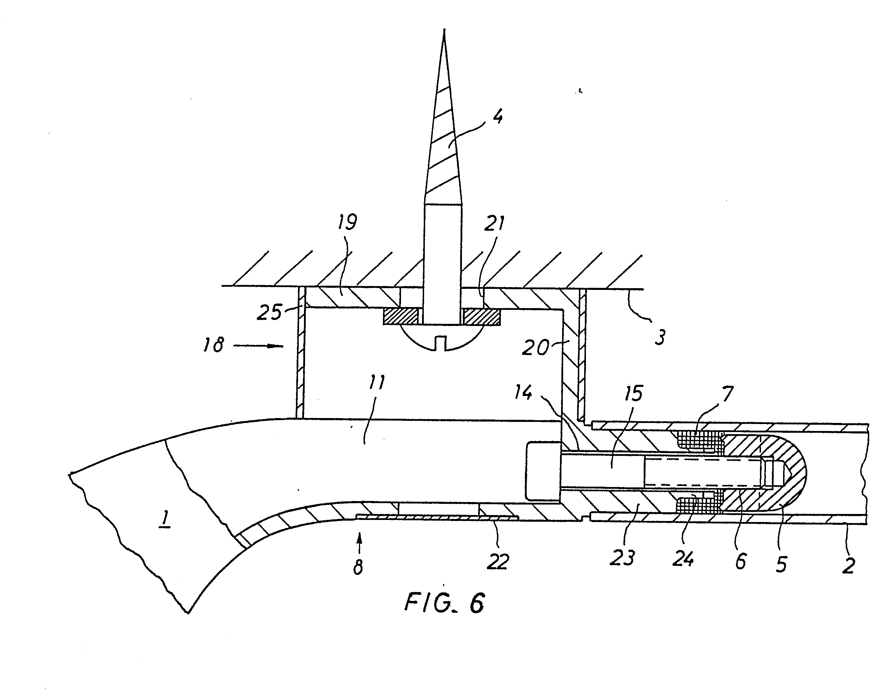

Bei dem in Fig. 6 in Teilansicht dargestellten Brausekopf
trägt der Anschlußflansch 12 einen relativ weit in die Rohrleitung 2 hineinragenden, an dieser innen rundum anliegenden Ansatz 23, durch den die zum Brausekopf 1 führenden
Kanäle geführt sind. Dieser Ansatz 23 weist eine zentrale
Durchbrechung 14 auf, die mit dem Gewindesackloch 6 des
Einsatzes 5 und der damit fluchtenden zentralen Durchbrechung einer Dichtung 7 fluchtet. Auf der vom Brausekopf 1 abgewandten Seite trägt der Ansatz 23 einen zylindrischen Fortsatz 24, dessen Inneres eine Fortsetzung der Durchbrechung 14 bildet. Auf den Fortsatz 24 ist eine als Quetschdichtung ausgebildete Dichtung 7 geschoben, die im wesentlichen hutförmig ausgebildet und so bemessen ist, daß zwischen ihr und dem stirnseitigen Rand des Fortsatzes 24 vor der Endmontage genügend Platz ist, so daß sie während der Montage gegen den Fortsatz 24 gezogen werden kann mit der Folge, daß ihre Randbereiche gestaucht und nach außen gegen die Innenwandung der Rohrleitung 2 gedrückt werden können.

Bei der in Fig. 6 dargestellten Ausführungsform ist es möglich, auf eine gesonderte Befestigung, beispielsweise durch Verlötung, des Einsatzes 5 im Inneren der Rohrleitung 2 zu verzichten, da dieser nach dem Anziehen der Schraube 15 durch die dann gequetschte Dichtung 7 zusammen mit dem Einsatz 23 fest in der Rohrleitung 2 gehälten wird. Ein unbeabsichtigtes Herausziehen aus der Rohrleitung 2 wird zudem durch die spätere Verschraubung des Brausekopfes 1 mit der Wand 3 verhindert.

Wie in Fig. 6 dargestellt, kann auf den Abstandhalter 18 des Anschlußstückes 8 vor dessen Montage eine Mantelhülse 25 geschoben werden, die das Innere des Abstandhalters 18 vor Verunreinigungen schützt, und somit auch im Befestigungsbereich leichte Reinigung gewährleistet und damit zur hygienisch einwandfreien Ausbildung des ganzen Gerätes sorgt.

0114294

Anmelderin:      Hans Grohe GmbH & Co. KG
                 Auestraße 9, Postfach 45
                 D-7622 Schiltach


                 A n s p r ü c h e

                 Verbindung von wasser-
                 führenden Teilen

                 _____


1. Verbindung von wasserführenden Teilen mit unrundem
   Querschnitt im Verbindungsbereich, insbesondere zum
   Anschluß eines Brausekopfes (1) an eine im Querschnitt
   im wesentlichen rechteckige Aufputzrohrleitung (2), dadurch gekennzeichnet, daß mindestens zwei innerhalb des
   Außenquerschnittes der wasserführenden Teile (2,8) angeordnete, miteinander verschraubbare Verbindungselemente
   (5,15) vorgesehen sind und wenigstens eines der wasserführenden Teile (8) mindestens einen von außen zugänglichen,
   innerhalb des Außenquerschnittes des wasserführenden Teiles
   liegenden und parallel zur Verbindungsfläche der beiden
   wasserführenden Teile (2,8) verlaufenden Verbindungsflansch
   (12) mind mindestens einer Öffnung (14) aufweist, durch die
   die Verbindungselemente (5,15) miteinander in Wirkverbindung bringbar sind, und wenigstens ein anderes wasserfüh-

0114294

rendes Teil (2) im wesentlichen gleich ausgebildet ist oder wenigstens ein darin befindliches und lediglich von der Verbindungsfläche aus zugängliches Verbindungselement (5) aufweist, das mit der Flanschöffnung (14) fluchtet.

2. Verbindung nach Anspruch 1, dadurch gekennzeichnet, daß das im anderen wasserführenden Teil (2) befindliche Verbindungselement (5) durch- und/oder umströmbar ist.

3. Verbindung nach einem der vorhergehenden Ansprüche, dadurch gekennzeichnet, daß das im anderen wasserführenden Teil (2) befindliche Verbindungselement ein Einsatz (5) ist, dessen Außenabmessungen vorzugsweise den Innenabmessungen des Leitungskanales des wasserführenden Teiles (2) entsprechen und daß der Einsatz (5) wenigstens eine der Wasserführung dienende Durchbrechung aufweist, insbesondere der Einsatz (5) zwei der Wasserführung dienende Durchbrechungen aufweist, zwischen denen eine Gewindebohrung (6) zum Einschrauben des als Befestigungsschraube ausgebildeten zweiten Verbindungselementes (15) angeordnet ist, wobei die Befestigungsschraube (15) vorzugsweise in ihrer axialen Richtung zugänglich ist.

4. Verbindung nach einem der vorhergehenden Ansprüche, dadurch gekennzeichnet, daß das eine wasserführende Teil ein im Querschnitt im wesentlichen rechteckiges Rohr (2) ist.

5. Verbindung nach einem der vorhergehenden Ansprüche, dadurch gekennzeichnet, daß der Flansch (12) von der nicht sichtbaren Rückseite her zugänglich ist.

6. Verbindung nach einem der vorhergehenden Ansprüche, dadurch gekennzeichnet, daß die Verbindungsfläche zwischen den beiden wasserführenden Teilen (2,8) in einem Winkel von 30 - 90° zur Durchströmrichtung verläuft.

7. Verbindung nach einem der vorhergehenden Ansprüche, dadurch gekennzeichnet, daß sie als Winkelverbindung ausgebildet ist, mindestens ein wasserführendes Teil (8), das den Flansch (12) aufweist, in einem kurzen Abstand von der Verbindungsfläche von der Seite, von der aus der Flansch (12) zugänglich ist, weggebogen bzw. abgewinkelt ist.

8. Verbindung nach einem der vorhergehenden Ansprüche, dadurch gekennzeichnet, daß die Wasserführungen der wasserführenden Teile (2,8) im Verbindungsbereich in mindestens zwei Teilströme (9,10) aufgeteilt und danach vorzugsweise wieder vereinigt sind, insbesondere das zweite wasserführende Teil (8) einen Brausekopf (1) aufweist, in den die beiden wasserführenden Bereiche (9,10) des zweiten wasserführenden Teiles (8) münden.

9. Verbindung nach Anspruch 8, dadurch gekennzeichnet, daß die Befestigungselemente (5,15) zwischen den Teilströmen (9,10) der wasserführenden Teile (2,8) angeordnet sind.

10. Verbindung nach einem der Ansprüche 3 bis 9, dadurch gekennzeichnet, daß dem Einsatz (5) eine vorzugsweise als Quetschdichtung ausgebildete Dichtung (7) zugeordnet ist, die vorzugsweise hutförmig ausgebildet und auf einen der beiden miteinander verschraubbaren Verbindungselemente (5,15) aufschiebbar ist.

11. Verbindung nach einem der Ansprüche 8 bis 10, dadurch gekennzeichnet, daß wenigstens eines der wasserführenden Teile (8) kurz vor der Verbindungsebene eine Durchbrechung für eine Wandbefestigungsschraube (4) aufweist, die zwischen den aufgetrennten wasserführenden Bereichen (9;10) angeordnet ist und der vorzugsweise eine Abdeckplatte (22) zugeordnet ist.

FIG. 1

FIG. 2

FIG. 3

FIG. 4

FIG. 5

FIG. 6